# EUROPEAN PATENT APPLICATION

(11) **EP 2 560 226 A1**
(43) Date of publication of application: **20.02.2013**
(21) Application number: 11007621.3
(22) Date of filing: 19.09.2011
(51) Int. Cl.: H01M 8/06, B01D 53/14

(54) **Method and system for purification of gas/liquid streams for fuel cells or electrolysis cells**

(30) Priority: 19.08.2011 EP 11006817
(71) Applicant: Technical University of Denmark, 2800 Kgs. Lyngby (DK)
(72) Inventor: Ebbesen, Sune D., 2200 Copenhagen (DK); Mogensen, Mogens Bjerg, 3540 Lynge (DK)
(74) Representative: Grünecker, Kinkeldey, Stockmair & Schwanhäusser

(57) **Abstract**

The present invention provides in embodiments a method for purification of inlet gas/liquid streams in a fuel cell or electrolysis cell, the fuel cell or electrolysis cell comprising at least a first electrode, an electrolyte and a second electrode, the method comprising the steps of:
- providing at least one scrubber in the gas/liquid stream at the inlet side of the first electrode of the fuel cell or electrolysis cell; and/or providing at least one scrubber in the gas/liquid stream at the inlet side of the second electrode of the fuel cell or electrolysis cell; and
- purifying the gas/liquid streams towards the first and second electrode;
wherein the at least one scrubber in the gas/liquid stream at the inlet side of the first electrode and/or the at least one scrubber in the gas/liquid stream at the inlet side of the second electrode comprises a material suitable as an electrolyte material and a material suitable as an electrode material, and wherein the material suitable as an electrolyte material and a material suitable as an electrode material form triple phase boundaries similar to or identical to the triple phase boundaries of the electrode for which the gas/liquid stream is purified with the at least one scrubber,
with the proviso that the fuel cell or electrolysis cell is not a solid oxide cell.

## Description

### Field of the invention

The present invention relates to a method and system for purification of inlet gas/liquid streams for fuel cells or electrolysis cells. More specifically, the present invention relates to a method and system for purification of gas/liquid streams to the electrodes of a fuel cell or electrolysis cell by removal of impurities which may poison the grain boundaries and reactive electrode sites in fuel cells or electrolysis cells. The present invention relates to the use of a scrubber for the purification of the gas/liquid streams to the electrodes of a fuel cell or electrolysis cell.

### Background of the invention

In advanced electrocatalytic systems, as found in fuel cells or electrolysis cells, the surface chemistry plays a significant role during operation, and the presence of impurities/additives on the respective surfaces has a major influence on the overall performance and durability of the device.

One example of fuel cells and electrolysis cells are solid oxide cells which generally include cells designed for different applications, such as solid oxide fuel cells (SOFCs), solid oxide electrolysis cells (SOECs), or membranes. Due to their common basic structure, including as basic components an electrolyte layer sandwiched by two electrode layers, i.e. an anode layer and a cathode layer, the same cell may be designed so as to be used in SOFC applications as well as SOEC applications. SOC is thus the generic term for Solid Oxide Fuel Cell and Solid Oxide Electrolysis Cell, which is basically an identical cell which can work reversibly in both modes, as an SOFC and as an SOEC. In the SOFC mode, fuel is fed into the cell and converted into power, while in SOEC mode, power is applied to produce fuel. These cells are therefore referred to as 'reversible' SOCs.

In operation in the electrolysis mode, for example, the following reactions take place at the electrodes:

CO_{2 Cathode} -> CO_{Cathode} + ½ O_{2 Anode}

H₂O _{Cathode} -> H_{2 Cathode} + ½ O_{2 Anode} and

CO _{Anode} + ½ O_{2 Cathode} -> CO_{2 Anode}

H_{2 Anode} + ½ O_{2 Cathode} -> H₂O _{Anode}

Solid oxide cells are a class of cells that are defined by the use of a solid oxide material as the electrolyte. In a solid oxide cell, the electrolyte conducts negative oxygen ions from the cathode to the anode. Typical examples of solid oxide cells are, for example, disclosed in international patent application no. PCT/EP2011/000793.

Another example of a fuel cell or an electrolysis cell is a proton exchange membrane (PEM) fuel cell or a PEM electrolysis cell, which comprise a special polymer electrolyte membrane. This allows for the use in lower temperature ranges. Other examples include alkaline fuel cells/electrolysis cells which comprise a porous matrix saturated with an alkaline solution in between two electrodes. Further examples include metal hydride cells, direct borohydride cells, direct methanol cells, direct ethanol cells, phosphoric acid cells, molten carbonate cells, and protonic ceramic cells, of which the majority can be applied as both fuel cells and electrolysis cells.

During the operation of a fuel cell or electrolysis cell, oxygen ions are formed from the provided oxygen-containing gas, such as air, O₂, CO₂ or H₂O, at the electrode functioning as the cathode, which migrate through the electrolyte layer to combine with the provided gas/liquid at the electrode functioning as the anode. The electrochemically active region is, however, limited to reactive electrode sites within the porous electrodes, so-called triple phase boundaries, where electrolyte material, gas/liquid and electrode material (anode or cathode) functioning as a catalyst are present at the same time.

The presence of various impurities contained in the gases/liquids fed towards each electrode can disadvantageously result in a decrease in activity due to the location in the grain boundaries, a decrease in the catalytic activity due to blocking of the triple phase boundaries. The impurities must therefore be removed from the inlet gases/liquids prior to contact with the cell components.

Other unwanted contaminants naturally present in the reactant flow include species comprising sulphur, chlorine, phosphor, NH₃ and alkali macromolecules. Removal of these harmful species is, however, normally energy and space demanding due to different means for filtering, said purification means being required and cost intensive.

Especially in alkaline fuel cells, carbon dioxide is not rejected, so that CO₂ can poison the electrolyte through the conversion to a carbonate. Consequently, purified fuels are necessary, making said processes cost intensive and difficult to handle.

PEM cells are highly sensitive to carbon monoxide, and if CO is contained in the fuel gas/liquid, the catalyst material's effectiveness may be drastically reduced.

The removal of sulphur containing species, most prominently H₂S and COS, is often carried out by wet scrubbing with alkaline solutions. As the feed streams applied for fuel cells or electrolysis cells may contain CO₂ as the reactant, special requirements apply for these gas/liquid streams, and only selective adsorption/adsorption can be applied. Suitable adsorbents are components including Ca (∼50ppm), Mn (∼5 ppm), Fe (∼1 ppm), Ni (<0.1 ppm), Cu (<1 ppm), Zn (<0.3 ppm), with the final H₂S concentration in the purified gas/liquid stream achievable in brackets. Most of these sorbents cannot, however, be regenerated and must be disposed after use.

Removal processes for chlorine and phosphor include two general methods, i.e. dry and wet processes. In the dry process, the impurities are removed with an adsorbent, while in the wet process the impurities are removed with a scrubbing liquid. For dry removal, two types of adsorbents are commercially available, usually based on sodium or calcium oxides, with which impurity concentrations can be reduced to below 1 ppm. The wet scrubbing process is usually based on alkaline water solutions. Disadvantageously, wet scrubbing will not only remove chlorine and phosphor, but also other components, such as CO₂. As the feed streams applied for SOCs may contain CO₂, the reactant wet scrubbing is thus not suitable for the cleaning of gas/liquid stream for SOCs.

As various impurities have to be removed prior to the gas/liquid entering the fuel cell or electrolysis cell, disadvantageously, different purification steps are necessary for each impurity since not all impurities can be reliably removed with only one purification process, which is cost and labour intensive. Moreover, the prior art only focuses on the main impurities known to be present in the inlet gas/liquid. However, up to date, little is known about other impurities also contained in the inlet gas/liquid, which may enter the cell so far unfiltered but nevertheless contribute to electrode poisoning, thereby reducing the lifetime of the cell.

EP-A-1231663 discloses a trap for use with energy conversion devices comprising a trapping system wherein particular matter and impurities such as sulphur, but also other unknown impurities, is removed from the gas/liquid stream.

In view of the above, there is a strong desire to reduce the amount of impurities at the grain boundaries and reactive electrode sites in order to improve the overall performance of the device in a more cost effective way.

### Object of the invention

It was the object of the present invention to provide a method and system for purification of gas/liquid streams to the electrodes of a fuel cell or electrolysis cell by removal of impurities which may poison the grain boundaries and reactive electrode sites in a fuel cell or electrolysis cell.

### Brief description of the invention

The present invention provides in embodiments a method for purification of gas/liquid streams in a fuel cell or electrolysis cell, the fuel cell or electrolysis cell comprising at least a first electrode, an electrolyte and a second electrode, the method comprising the steps of:
- providing at least one scrubber in the gas/liquid stream at the inlet side of the first electrode of the fuel cell or electrolysis cell; and/or providing at least one scrubber in the gas/liquid stream at the inlet side of the second electrode of the fuel cell or electrolysis cell; and
- purifying the gas/liquid streams towards the first and second electrode;
   wherein the at least one scrubber in the gas/liquid stream at the inlet side of the first electrode and/or the at least one scrubber in the gas/liquid stream at the inlet side of the second electrode comprises a material suitable as an electrolyte material and a material suitable as an electrode material, and wherein the material suitable as an electrolyte material and a material suitable as an electrode material form triple phase boundaries similar to or identical to the triple phase boundaries of the electrode for which the gas/liquid stream is purified with the at least one scrubber,
   with the proviso that the fuel cell or electrolysis cell is not a solid oxide cell.

More specifically, the present invention provides in embodiments a method for purification of gas/liquid streams in a fuel cell or electrolysis cell, the fuel cell or electrolysis cell comprising at least a first electrode, an electrolyte and a second electrode, the method comprising the steps of:
- providing at least one scrubber in the gas/liquid stream at the inlet side of the first electrode of the fuel cell or electrolysis cell; and/or providing at least one scrubber in the gas/liquid stream at the inlet side of the second electrode of the fuel cell or electrolysis cell; and
- purifying the gas/liquid streams towards the first and second electrode;
   wherein the at least one scrubber in the gas/liquid stream at the inlet side of the first electrode and/or the at least one scrubber in the gas/liquid stream at the inlet side of the second electrode comprises a material suitable as an electrolyte material and a material suitable as an electrode material, and wherein the material suitable as an electrolyte material and a material suitable as an electrode material form triple phase boundaries similar to or identical to the triple phase boundaries of the electrode for which the gas/liquid stream is purified with the at least one scrubber,
   with the proviso that the fuel cell or electrolysis cell is not a solid oxide cell.

The present invention further provides a system for purification of gas/liquid streams for fuel cells or electrolysis cells, comprising
- a fuel cell or electrolysis cell, comprising
   - a first electrode;
   - an electrolyte; and
   - a second electrode;
- a gas/liquid inlet towards the first electrode;
- a gas/liquid inlet towards the second electrode;
- a purification means comprising at least one scrubber located in the gas/liquid inlet of the first electrode; and/or a purification means comprising at least one scrubber located in the gas/liquid inlet of the first electrode;
   wherein the at least one scrubber in the gas/liquid stream at the inlet side of the first electrode and/or the at least one scrubber in the gas/liquid stream at the inlet side of the second electrode comprises a material suitable as an electrolyte material and a material suitable as an electrode material, wherein the material suitable as an electrolyte material and a material suitable as an electrode material form triple phase boundaries similar to or identical to the triple phase boundaries of the electrode for which the gas/liquid stream is purified with the at least one scrubber,
   with the proviso that the fuel cell or electrolysis cell is not a solid oxide cell.

The present invention also relates to a scrubber for use in the gas/liquid stream at the inlet side of a first and/or a second electrode of a fuel cell or electrolysis cell for purifying the gas/liquid streams towards the first and/or second electrode;
wherein the scrubber in the gas/liquid stream at the inlet side of the first electrode and/or the scrubber in the gas/liquid stream at the inlet side of the second electrode comprises a material suitable as an electrolyte material and a material suitable as an electrode material, and wherein the material suitable as an electrolyte material and a material suitable as an electrode material form triple phase boundaries similar to or identical to the triple phase boundaries of the electrode for which the gas/liquid stream is purified with the at least one scrubber,
with the proviso that the fuel cell or electrolysis cell is not a solid oxide cell.

The present invention finally relates to the use of a composition comprising a material suitable as an electrolyte material and a material suitable as an electrode material as a scrubber suitable for the purification of gas/liquid streams in fuel cells or electrolysis cells,
with the proviso that the fuel cell or electrolysis cell is not a solid oxide cell.

Preferred embodiments are set forth in the subclaims.

### Detailed description of the invention

The present invention generally relates to the purification of gas/liquid streams at least at the inlet sides to the electrode(s) of a fuel cell or electrolysis cell, wherein the gas/liquid streams are purified due to contact with a material comprising triple phase boundaries similar to or identical to the triple phase boundaries of the respective electrodes. Any impurities capable of poisoning the active sites of the electrodes are effectively removed from the gas/liquid stream due to their affinity to the triple phase boundaries in the material used for the purification.

More specifically, the present invention provides a method for purification of gas/liquid streams for a fuel cell or electrolysis cell, the fuel cell or electrolysis cell comprising at least a first electrode, an electrolyte and a second electrode, the method comprising the steps of:
- providing at least one scrubber in the gas/liquid stream at the inlet side of the first electrode of the fuel cell or electrolysis cell; and/or providing at least one scrubber in the gas/liquid stream at the inlet side of the second electrode of the fuel cell or electrolysis cell; and
- purifying the gas/liquid streams towards the first and second electrode;
   wherein the at least one scrubber in the gas/liquid stream at the inlet side of the first electrode and/or the at least one scrubber in the gas/liquid stream at the inlet side of the second electrode comprises a material suitable as an electrolyte material and a material suitable as an electrode material, wherein the material suitable as an electrolyte material and a material suitable as an electrode material form triple phase boundaries similar to or identical to the triple phase boundaries of the electrode for which the gas/liquid stream is purified with the at least one scrubber,
   with the proviso that the fuel cell or electrolysis cell is not a solid oxide cell.

Advantageously, with the method of the present invention, the gas/liquid towards the fuel cell or electrolysis cell is purified with regard to all critical impurities which cause degradation of the fuel cell or electrolysis cell by blocking the active triple-phase boundary sites without the need to be fine-tuned towards a specific identified impurity. Thus, despite the use of only one scrubber comprising a material suitable as an electrolyte material and a material suitable as an electrode material, the gas/liquid stream can be purified of all impurities still remaining in the gas/liquid stream purified with means known in the art so far, which is also advantageous in today's desire to minimize systems in terms of space and weight requirements. More specifically, the scrubber in the gas/liquid stream at the inlet side of the first electrode of the fuel cell or electrolysis cell and/or in the gas/liquid stream at the inlet side of the second electrode of the fuel cell or electrolysis cell comprises a material suitable as an electrolyte material and a material suitable as an electrode material, thereby forming a structure resembling the reactive sites, i.e. triple phase boundaries similar to or identical to the respective reactive sites of the electrodes. Any impurity which would poison reactive sites in the electrodes will instead be adsorbed in the respective structure of the scrubber, being effectively removed from the inlet gas/liquid towards the electrode.

The method of the present invention thus provides a cost effective way of prolonging the life time of a fuel cell or electrolysis cell without the need to further modify the materials of the cell, i.e. the need to make the cell more resilient towards impurities. This, in return, allows for more freedom regarding the cell materials without compromising the durability of the cell.

Specific examples of fuel cells and electrolysis cells of the present invention include alkaline cells, metal hydride cells, direct borohydride cells, direct methanol cells, direct ethanol cells, proton exchange membrane cells, phosphoric acid cells, and molten carbonate cells, of which the majority can be applied as both fuel cells and electrolysis cells.

In the present invention, the fuel cells and electrolysis cells are not solid oxide cells. The excluded solid oxide cells are a class of cells that are defined by the use of a solid oxide material as the electrolyte. Examples of solid oxide cells excluded in this invention are especially the solid oxide cells disclosed in international patent application no. PCT/EP2011/000793.

The scrubber employed in the method (and system) of the present invention is a porous material comprising gas/liquid passage ways, for example, a monolithic honeycomb structure. The gas/liquid to be purified passes the porous material on its way to the respective electrode. Since the scrubber comprises a material suitable as an electrolyte material and a material suitable as an electrode material for a fuel cell or electrolysis cell, the scrubber comprises a structure comprising triple phase boundaries formed of the electrolyte material, the electrode material and the gas/liquid in accordance with the triple phase boundaries in the electrode layers of a fuel cell or electrolysis cell.

Due to the similar or identical structure, the impurities will be deposited in the scrubber material before entering the fuel cell or electrolysis cell, i.e. the need to make the cell more resistant against impurities. This, in return, allows for more freedom regarding the cell materials without compromising the durability of the cell.

In a preferred embodiment, the scrubber in the gas/liquid stream at the inlet side of the first electrode comprises the same material as the first electrode, and/or the scrubber in the gas/liquid stream at the inlet side of the second electrode comprises the same material as the second electrode.

Most preferred is that the scrubber material either contains identical triple-phase boundary sites, i.e. the same material as the respective electrode, or that the scrubber material contains triple-phase boundary sites, which are even "less tolerant", i.e. more reactive towards impurities than the actual electrodes.

For the oxidant-gas/liquid stream, for example, air or O₂, common materials known in the art may be employed, depending on the type of cell and desired application. In the more preferred embodiment of the present invention, the specific material for the scrubber depends on the materials used in the respective electrode. More important than any possible materials is the scrubber forming the same structure as the electrode, i.e. the same triple phase boundaries. Thus, the choice of materials for the scrubber mainly depends on the materials used for the electrode. Specific examples for some applications include Lanthanum Strontium Manganite LSM/YSZ or Lanthanum Strontium Cobalt Ferrite LSCF/YSZ. The gas-cleaning capability for impurities such as sulphur, chlorine and phosphor may further be improved by the addition of oxides selected from the group consisting of Na, Ca, Mn, Fe, Ni, Cu, Zn or Ce.

More specific examples of suitable materials include, without limiting the application thereto, for cleaning of the fuel-gas/liquid stream (H₂/H₂O, CO/CO₂, CH₄):
While the active material in the scrubber for the fuel-gas/liquid stream may be generally any known suitable material in the art, depending on the type of cell and the type of electrode, as outlined above, more preferred materials include Ni/YSZ or Ni/ScYSZ with an average particle size of around 2 µm, corresponding to the average particle size in the fuel cell or electrolysis cell.

The active material in the scrubber for the fuel-gas/liquid stream may be Ni/YSZ or Ni/ScYSC with the addition of at least one of the materials selected from the group of Na, Ca, La, Zr, Nb, Cr, Mn, Fe, Cu, Ni, Cu, Zn, Al, Si or Ce and alloys thereof with an average particle size of around 2 µm, corresponding to the average particle size in the fuel cell or electrolysis cell.

The active material in the scrubber for the fuel-gas/liquid stream may be Ni/YSZ or Ni/ScYSC. Because there are no restrictions to electronic or ionic conductivity, the average particle size can be smaller than 2 µm to increase the length of the active sites.

The active material in the scrubber for the fuel-gas/liquid stream may be Ni/YSZ or Ni/ScYSC with the addition of materials selected from the group of Na, Ca, La, Zr, Nb, Cr, Mn, Fe, Cu, Ni, Cu, Zn, Al, Si or Ce and alloys thereof. Because there are no restrictions to electronic or ionic conductivity, the average particle size can be smaller than 2 µm to increase the length of the active sites.

More specific examples of suitable materials include, without limiting the application thereto, for the cleaning of the oxidant-gas/liquid stream:
The active material in the scrubber for the oxidant-gas/liquid stream may be LSM/YSZ (Lanthanum Strontium Manganite/Yttria Stabilised Zirconia) or LSCF/YSZ (Lanthanum Strontium Cobaltite Ferrite/Yttria Stabilised Zirconia) with an average particle size of around 2 µm, corresponding to the average particle size in the fuel cell or electrolysis cell.
The active material in the scrubber for the oxidant-gas/liquid stream may be LSM/YSZ or LSCF/YSZ with the addition of materials selected from the group of Na, Ca, La, Zr, Nb, Cr, Mn, Fe, Cu, Ni, Cu, Zn, Al, Si or Ce and alloys thereof with an average particle size of around 2 µm, corresponding to the average particle size in the fuel cell or electrolysis cell.

The active material in the scrubber for the oxidant-gas/liquid stream may be LSM/YSZ or LSCF/YSZ. Because there are no restrictions to electronic or ionic conductivity, the average particle size may be smaller than 2 µm to increase the length of the active sites.

The active material in the scrubber for the oxidant-gas/liquid stream may be LSM/YSZ or LSCF/YSZ with the addition of materials selected from the group of Al, Ba, Bi, Ca, Ce, Co, Cr, Cu, Fe, Ga, Gd, La, Mn, Mo, Na, Nb, Nd, Ni, Sb, Sc, Si, Sm, Sr, St, Ti, Y, Zn, Zr, LSM, LSC, LSF, LSCF, LNF, LaMnO, LaCoO, SmCoO, LaFeO, LBSM, GDC, STN, NdNiO, LaSrSiO, BSC, SmSr(Co,Fe,Ni)O, YBaCoO, SrCoSbO, SrTiFeO, SrScCoO, LaSrCoNiO, stabilized zirconia (YSZ, ScYSZ), doped ceria (ceria doped with gadolinium (CGO), samarium, lanthanum, yttrium, ytterbium and/or neodymium); strontium/magnesium/barium-doped lanthanum gallate (LSGM,LBGM, LSGM-Co or LSGM-Fe); BaCeO₃ doped with samarium, neodymium and/or ytterbium), and mixtures thereof. Because there are no restrictions to electronic or ionic conductivity, the average particle size may be smaller than 2 µm to increase the length of the active sites.

In a further preferred embodiment of the method of the present invention, the scrubber in the gas/liquid stream at the inlet side of the first electrode and/or the scrubber in the gas/liquid stream at the inlet side of the second electrode of the fuel cell or electrolysis cell is operated at the same temperature as, or slightly below, the operation temperature of the first and/or second electrode. This ensures an optimal purification of the gas/liquid stream as the material comprised in the scrubber shows the same chemical and electrochemical behaviour as the electrode material of the fuel cell or electrolysis cell.

The present invention further provides a system for purification of gas/liquid streams for fuel cells or electrolysis cells, comprising
- a fuel cell or electrolysis cell, comprising
   - a first electrode;
   - an electrolyte; and
   - a second electrode;
- a gas/liquid inlet towards the first electrode;
- a gas/liquid inlet towards the second electrode;
- a purification means comprising at least one scrubber located in the gas/liquid inlet of the first electrode; and/or a purification means comprising at least one scrubber located in the gas/liquid inlet of the first electrode;
   wherein the at least one scrubber in the gas/liquid stream at the inlet side of the first electrode and/or the at least one scrubber in the gas/liquid stream at the inlet side of the second electrode comprises a material suitable as an electrolyte material and a material suitable as an electrode material, and wherein the material suitable as an electrolyte material and a material suitable as an electrode material form triple phase boundaries similar to or identical to the triple phase boundaries of the electrode for which the gas/liquid stream is purified with the at least one scrubber,
   with the proviso that the fuel cell or electrolysis cell is not a solid oxide cell.

As indicated above in connection with the method of the present invention, advantageously, the scrubbers in the gas/liquid stream of the system purify the gas/liquid with regard to all critical impurities which cause degradation of the fuel cells or electrolysis cells by blocking the active triple-phase boundary sites without the need to be fine-tuned towards a specific identified impurity. Thus, the use of a single scrubber, i.e. the scrubber in accordance with the present invention, can effectively purify the gas/liquid stream of all impurities, which is also positive in today's desire to minimize systems in terms of space and weight requirements.

Furthermore, the scrubbers are attached to the fuel cell or electrolysis cell system in the gas/liquid streams without forming a part of the fuel cell or electrolysis cell, and can therefore be easily replaced if required without the need to handle the cell stack as such. Therefore, if the purification efficiency of a scrubber decreases below a desired minimum, a simple exchange of the scrubbers can be carried out in a time efficient manner, thereby prolonging the lifetime of the cell while offering a replacement of a cheap part of the system, making the system overall more cost effective.

In a preferred embodiment, the scrubber in the gas/liquid stream at the inlet side of the first electrode comprises the same material as the first electrode, and/or the scrubber in the gas/liquid stream at the inlet side of the second electrode comprises the same material as the second electrode.

Most preferred is that the scrubber material either contains identical triple-phase boundary sites, i.e. the same material as the respective electrode, or that the scrubber material contains triple-phase boundary sites, which are even "less tolerant", i.e. more reactive towards impurities than the actual electrodes.

As for the preferred materials, the same materials indicated above in connection with the method of the invention are preferably used in the system as well.

Advantageously, with the method and system of the present invention, impurities of electrochemically active sites of a fuel cell or electrolysis cell can be effectively removed from the gas/liquid streams towards the electrodes of the cell, resulting in the fuel cell or electrolysis cell having a prolonged lifetime and increased performance over time.

The method of the present invention advantageously results in the immobilization and removal of impurities from grain boundaries and reactive electrode sites in solid state electrochemical devices in a simple and very efficient way, making the process more cost effective while allowing for an improved fuel cell or electrolysis cell life time as compared to the fuel cells or electrolysis cells of the prior art, and allowing for a reduction of space and weight required for the removal of impurities as compared to the prior art.

The present invention moreover relates to a scrubber for use in the gas/liquid stream at the inlet side of a first and/or a second electrode of a fuel cell or electrolysis cell for purifying the gas/liquid streams towards the first and/or second electrode;
wherein the scrubber in the gas/liquid stream at the inlet side of the first electrode and/or the scrubber in the gas/liquid stream at the inlet side of the second electrode comprises a material suitable as an electrolyte material and a material suitable as an electrode material.

Finally, the present invention relates to the use of a composition comprising a material suitable as an electrolyte material and a material suitable as an electrode material as a scrubber suitable for the purification of gas/liquid streams in fuel cells or electrolysis cells.

Advantageously, the composition comprising a material suitable as an electrolyte material and a material suitable as an electrode material forms triple phase boundaries with the gas/liquid towards the electrode. When the materials are similar to or, in the more preferred case when the materials are identical to the materials used for the respective electrode, the formed triple phase boundaries are similar to or even identical to the triple phase boundaries formed in the electrode itself. Any impurities comprised in the gas/liquid stream which are detrimental to the respective sites in the actual electrode where triple phase boundaries are formed are thus already attracted to the sites in the scrubber employing the above composition and are effectively removed from the gas/liquid stream prior to entering the electrode, resulting in the fuel cell or electrolysis cell having a prolonged lifetime and increased performance over time.

Preferably, the at least one scrubber in the gas/liquid stream at the inlet side of the first electrode comprises the same material used as the electrolyte material and electrode material in the first electrode. Also preferred is that the scrubber in the gas/liquid stream at the inlet side of the second electrode comprises the same material used as the electrolyte material and electrode material in the second electrode.

As for the preferred materials, the same materials indicated above in connection with the method and system of the invention are preferably employed in this embodiment as well.

## Claims

1. Method for purification of gas/liquid streams in a fuel cell or electrolysis cell, the fuel cell or electrolysis cell comprising at least a first electrode, an electrolyte and a second electrode, the method comprising the steps of:
- providing at least one scrubber in the gas/liquid stream at the inlet side of the first electrode of the fuel cell or electrolysis cell; and/or providing at least one scrubber in the gas/liquid stream at the inlet side of the second electrode of the fuel cell or electrolysis cell; and
- purifying the gas/liquid streams towards the first and second electrode;
wherein the at least one scrubber in the gas/liquid stream at the inlet side of the first electrode and/or the at least one scrubber in the gas/liquid stream at the inlet side of the second electrode comprises a material suitable as an electrolyte material and a material suitable as an electrode material, and wherein the material suitable as an electrolyte material and a material suitable as an electrode material form triple phase boundaries similar to or identical to the triple phase boundaries of the electrode for which the gas/liquid stream is purified with the at least one scrubber,
with the proviso that the fuel cell or electrolysis cell is not a solid oxide cell.

2. The method of claim 1, wherein the scrubber in the gas/liquid stream at the inlet side of the first electrode comprises the same material used as the electrolyte material and electrode material in the first electrode.

3. The method of claim 1 or 2, wherein the scrubber in the gas/liquid stream at the inlet side of the second electrode comprises the same material used as the electrolyte material and electrode material in the second electrode.

4. The method of any one of claims 1 to 3, wherein the material suitable as the electrode material for the at least one scrubber in the gas/liquid stream at the inlet side of the first electrode and/or the at least one scrubber in the gas/liquid stream at the inlet side of the second electrode is selected from the group consisting of among Al, Ba, Bi, Ca, Ce, Co, Cr, Cu, Fe, Ga, Gd, La, Mn, Mo, Na, Nb, Nd, Ni, Sb, Sc, Si, Sm, Sr, St, Ti, Y, Zn, Zr, LSM, LSC, LSF, LSCF, LNF, LaMnO, LaCoO, SmCoO, LaFeO, LBSM, GDC, STN, NdNiO, LaSrSiO, BSC, SmSr(Co,Fe,Ni)O, YBaCoO, SrCoSbO, SrTiFeO, SrScCoO, LaSrCoNiO, and mixtures thereof.

5. The method of any one of claims 1 to 4, wherein the electrolyte material suitable for the at least one scrubber in the gas/liquid stream at the inlet side of the first electrode and/or the at least one scrubber in the gas/liquid stream at the inlet side of the second electrode in the scrubber is selected from the group consisting of YSZ, ScYSZ, ceria doped with gadolinium, samarium, lanthanum, yttrium, ytterbium and/or neodymium; LSGM,LBGM, LSGM-Co, LSGM-Fe; BaCeO₃ doped with samarium, neodymium and/or ytterbium.

6. The method of any one of claims 1 to 5, wherein the scrubber in the gas/liquid stream at the inlet side of the first electrode and/or the scrubber in the gas/liquid stream at the inlet side of the second electrode of the fuel cell or electrolysis cell is operated at the same temperature as the operation temperature of the first and/or second electrode.

7. A system for purification of gas/liquid streams in fuel cells or electrolysis cells, comprising
- a fuel cell or electrolysis cell, comprising
- a first electrode;
- an electrolyte; and
- a second electrode;
- a gas/liquid inlet towards the first electrode;
- a gas/liquid inlet towards the second electrode;
- a purification means comprising at least one scrubber located in the gas/liquid inlet of the first electrode; and/or a purification means comprising at least one scrubber located in the gas/liquid inlet of the first electrode;
wherein the at least one scrubber in the gas/liquid stream at the inlet side of the first electrode and/or the at least one scrubber in the gas/liquid stream at the inlet side of the second electrode comprises a material suitable as an electrolyte material and a material suitable as an electrode material, and wherein the material suitable as an electrolyte material and a material suitable as an electrode material form triple phase boundaries similar to or identical to the triple phase boundaries of the electrode for which the gas/liquid stream is purified with the at least one scrubber,
with the proviso that the fuel cell or electrolysis cell is not a solid oxide cell.

8. The system of claim 7, wherein the scrubber in the gas/liquid stream at the inlet side of the first electrode comprises the same material used as the electrolyte material and electrode material in the first electrode.

9. The system of claim 7 or 8, wherein the scrubber in the gas/liquid stream at the inlet side of the second electrode comprises the same material used as the electrolyte material and electrode material in the second electrode.

10. The system of any one of claims 7 to 9, wherein the material suitable as the electrode material for the at least one scrubber in the gas/liquid stream at the inlet side of the first electrode and/or the at least one scrubber in the gas/liquid stream at the inlet side of the second electrode is selected from the group consisting of among Al, Ba, Bi, Ca, Ce, Co, Cr, Cu, Fe, Ga, Gd, La, Mn, Mo, Na, Nb, Nd, Ni, Sb, Sc, Si, Sm, Sr, St, Ti, Y, Zn, Zr, LSM, LSC, LSF, LSCF, LNF, LaMnO, LaCoO, SmCoO, LaFeO, LBSM, GDC, STN, NdNiO, LaSrSiO, BSC, SmSr(Co,Fe,Ni)O, YBaCoO, SrCoSbO, SrTiFeO, SrScCoO, LaSrCoNiO, and mixtures thereof.

11. The system of any one of claims 7 to 10, wherein the electrolyte material suitable for the at least one scrubber in the gas/liquid stream at the inlet side of the first electrode and/or the at least one scrubber in the gas/liquid stream at the inlet side of the second electrode in the scrubber is selected from the group consisting of YSZ, ScYSZ, ceria doped with gadolinium, samarium, lanthanum, yttrium, ytterbium and/or neodymium; LSGM,LBGM, LSGM-Co, LSGM-Fe; BaCeO₃ doped with samarium, neodymium and/or ytterbium.

12. Scrubber for use in the gas/liquid stream at the inlet side of a first and/or a second electrode of a fuel cell or electrolysis cell for purifying the gas/liquid streams towards the first and/or second electrode;
wherein the scrubber in the gas/liquid stream at the inlet side of the first electrode and/or the scrubber in the gas/liquid stream at the inlet side of the second electrode comprises a material suitable as an electrolyte material and a material suitable as an electrode material, and wherein the material suitable as an electrolyte material and a material suitable as an electrode material form triple phase boundaries similar to or identical to the triple phase boundaries of the electrode for which the gas/liquid stream is purified with the at least one scrubber,
with the proviso that the fuel cell or electrolysis cell is not a solid oxide cell.

13. The scrubber of claim 12, wherein the at least one scrubber in the gas/liquid stream at the inlet side of the first electrode comprises the same material used as the electrolyte material and electrode material in the first electrode.

14. The scrubber of claim 12, wherein the scrubber in the gas/liquid stream at the inlet side of the second electrode comprises the same material used as the electrolyte material and electrode material in the second electrode.

15. Use of a composition comprising a material suitable as an electrolyte material and a material suitable as an electrode material as a scrubber suitable for the purification of gas/liquid streams in fuel cells or electrolysis cells,
with the proviso that the fuel cell or electrolysis cell is not a solid oxide cell.
